# FASCICULE DE BREVET EUROPEEN

(11) **EP 0 488 859 B1**
(45) Date de publication et mention de la délivrance du brevet: **10.05.1995**
(21) Numéro de dépôt: 91403151.3
(22) Date de dépôt: 22.11.1991
(51) Int. Cl.: F16F 15/12, F16D 13/68

(54) **Dispositif amortisseur de torsion, notamment pour disque d'embrayage de vehicule automobile**
Drehschwingungsdämpfer, insbesondere für Automobil-Scheibenkupplungen
Device for dumping torsions, for a disck cluch of a automobile vehicle

(30) Priorité: 28.11.1990 FR 9014872
(43) Date de publication de la demande: 03.06.1992
(73) Titulaire: VALEO, 75848 Paris Cédex 17 (FR)
(72) Inventeur: Dalbiez, André, F-95100 Argenteuil (FR)
(74) Mandataire: Gamonal, Didier

(56) Documents cités:
- EP-A- 0 174 233
- EP-A- 0 463 941
- FR-A- 2 386 729
- GB-A- 2 089 472

## Description

La présente invention concerne un dispositif amortisseur de torsion, notamment pour disque de friction d'embrayage de véhicule automobile tel que décrit dans le document FR-A-2 496 210. Dans ce document des troisièmes moyens élastiques sont interposés circonférentiellement entre le voile et le moyeu pour permettre une venue en butée circonférentielle positive de la denture du voile avec la denture du moyeu en procurant un effet de freinage anti-bruit.

On obtient ainsi un adoucissement de la venue en butée des dents formées respectivement sur le voile et sur le moyeu et on évite ainsi les bruits dus aux chocs entre les dentures. Dans une réalisation, un anneau en matière élastique est engagé autour d'une des dents d'une des dentures dans une gorge de cette dent, et est agencé de manière à être comprimé par les dents voisines de l'autre denture.

Une telle solution est efficace à l'état neuf mais peut se détériorer dans le temps. En outre, les dents qui reçoivent le ou les anneaux sont affaiblies et le couple qu'elles permettent de transmettre est ainsi réduit.

Afin de pallier ces inconvénients, il a été proposé dans la demande de brevet européen antérieure, EP-A-0 463 941, publiée après la date de priorité de la demande présente, de réaliser les troisièmes moyens élastiques sous forme d'une rondelle en matière élastique, distincte des premiers et deuxièmes moyens élastiques que présente ledit dispositif amortisseur s'étendant dans une direction radiale parallèlement au voile et pourvue d'une denture complémentaire à celle du moyeu, engrenant avec la denture du moyeu avec un jeu circonférentiel inférieur au jeu circonférentiel prévu entre les dentures du voile et du moyeu, la denture du moyeu étant prolongée axialement pour pouvoir engrener avec les dentures du voile et de la rondelle d'amortissement des chocs.

Cette rondelle est solidaire en rotation du voile et, à sa périphérie interne, est en matériau déformable élastiquement. Dans certaines applications pour des raisons de simplifications de fabrication et une bonne résistance au cours du temps, il peut être souhaitable que cette rondelle soit rigide à sa périphérie interne.

La présente invention a pour objet de répondre à ces desiderata sans affaiblir les dentures du voile et du moyeu et tout en ayant une solution efficace dans le temps.

Un dispositif amortisseur de torsion conforme à l'invention se distingue de l'état de la technique connu du document EP-A-0 463 941 en ce que la rondelle d'amortissement comporte au moins une première pièce rigide dotée de ladite denture complémentaire à celle du moyeu et, radialement au dela de ladite denture complémentaire, au moins une seconde pièce déformable élastiquement pour liaison en rotation avec le voile.

Grâce à l'invention, la fabrication de la rondelle d'amortissement est simplifiée car la denture complémentaire est pratiquée dans la pièce rigide et les déformations de la pièce déformable sont bien maîtrisées dans le temps. En outre, les dentures du moyeu et du voile ne sont pas affectées et affaiblies.

Dans une réalisation, on tire parti, de manière économique et simple, du palier interposé radialement entre l'une des rondelles de guidage de l'amortisseur et le moyeu pour pratiquer dans celui-ci ladite denture complémentaire. Avantageusement, on engage alors une bague en matériau déformable élastiquement sur chaque téton que présente usuellement ledit palier pour liaison en rotation avec le voile, chaque dite bague pénétrant dans l'ouverture prévue à cet effet dans le voile.

Dans une autre réalisation, ledit palier formant entretoise entre ladite rondelle de guidage et le voile, on tire parti de cette disposition pour utiliser l'espace disponible et interposer une rondelle d'amortissement des chocs selon l'invention entre ledit palier et ledit voile, ladite rondelle présentant à sa périphérie interne ladite denture complémentaire et portant à sa périphérie externe des bagues en matière élastique engagées chacune sur les tétons dudit palier.

Bien entendu la périphérie externe de ladite rondelle peut être en matière élastique et être liée en rotation auxdits tétons par une liaison du type tenon-mortaise.

D'autres caractéristiques et avantages de l'invention apparaîtront à la lecture détaillée qui va suivre pour la compréhension de laquelle on se reportera aux dessins annexés dans lesquels :
- la figure 1 est une vue en coupe axiale d'un disque de friction de l'art antérieur,
- la figure 2 est une vue à plus grande échelle et en élévation des dentures du voile et du moyeu de la figure 1 avec des blocs en matériau déformable élastiquement,
- la figure 3 est une demi-vue en coupe axiale montrant la zone correspondant à la périphérie interne du disque de friction et illustrant un premier mode de réalisation de la rondelle d'amortissement selon l'invention,
- la figure 4 est une demi-vue analogue à la figure 2 selon la flèche F4 de la figure 3, illustrant partiellement la rondelle selon l'invention,
- la figure 5 est une vue en section selon la ligne 5-5 de la figure 3,
- la figure 6 est une vue analogue à celle de la figure 3 d'un deuxième mode de réalisation de la rondelle d'amortissement selon l'invention,
- la figure 7 est une demi-vue analogue à celle de la figure 2 montrant la rondelle d'hystérésis variable de la figure 6,
- les figures 8 à 10 sont des vues analogues à celles des figures 3 à 5 illustrant un troisième mode de réalisation de la rondelle d'amortissement,
- les figures 11 et 12 sont des vues analogues aux figures 6 et 7 illustrant un quatrième mode de réalisation de la rondelle d'amortissement,
- la figure 13 est une vue analogue à la figure 5 montrant un cinquième mode de réalisation de la rondelle d'amortissement.

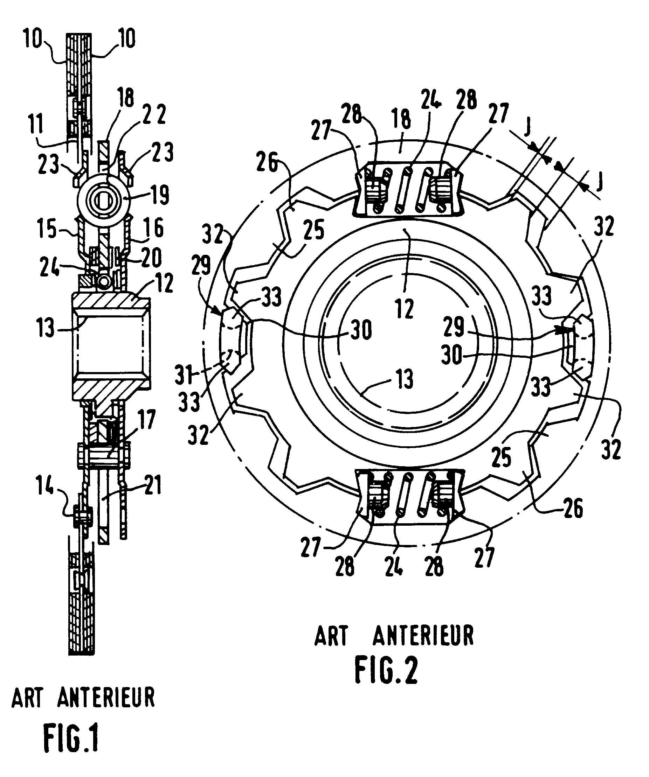

Dans les figures 1 et 2, est représentée une application à un dispositif amortisseur de torsion pour un disque d'embrayage de friction de véhicule automobile identique à celle représentée dans le document FR-A-2 496 210 au contenu duquel on pourra se reporter pour en connaître les détails de conception et de réalisation. On rappellera que ce dispositif comporte deux parties coaxiales 15-16-11-10 et 18-12, qui sont montées mobiles en rotation l'une par rapport à l'autre, selon une course angulaire limitée, à l'encontre de premiers moyens élastiques 19.

La deuxième partie 18-12 est elle-même composée d'un voile 18, qui s'étend dans un plan radial, et d'un moyeu 12 coaxial au voile 18, ces deux éléments étant montés mobiles en rotation l'un par rapport à l'autre à l'encontre de deuxièmes moyens élastiques 24, qui interviennent lors du débattement relatif de ces deux éléments dans un secteur angulaire défini par des dentures complémentaires 25 et 26 formées respectivement sur le voile 18 et sur le moyeu 12 (dans une bride saillante de celui-ci) pour définir le jeu circonférentiel J.

La première partie comporte des garnitures de friction 10, qui sont montées sur une plaque annulaire 11 de part et d'autre de celle-ci. Les garnitures 10, portées par la plaque 11, sont adaptées à être pincées entre les plateaux de pression et de réaction de l'embrayage qui sont solidaires en rotation d'un arbre moteur. Le moyeu 12, entouré par le voile 18, est adapté à être engagé, par des cannelures 13, sur un arbre mené (non représenté) ici l'arbre d'entrée de la boîte de vitesses du véhicule automobile pour liaison en rotation avec celui-ci.

La plaque 11 est fixée par des rivets 14 à une rondelle de guidage 15 elle-même reliée par des entretoises, ici sous forme de broches ou colonnettes 17, à une autre rondelle de guidage 16. A cet effet les colonnettes 17 traversent le voile 18 à la faveur d'évidements 21 ménagés de ce dernier. Les rondelles 15 et 16 sont montées tournantes autour du moyeu 12 sans interposition d'aucune denture ou de dispositifs équivalents, tandis que le voile 18 est disposé axialement entre les deux rondelles 15 et 16 en étant montée mobile en rotation par rapport au moyeu 12 avec interposition des dentures 25 et 26, qui limitent angulairement les possibilités de rotation relative du voile 18 par rapport au moyeu 12.

Les premiers moyens élastiques 19 consistent en une pluralité de ressorts hélicoïdaux, à action circonférentielle, logés dans des fenêtres 22 du voile 18 et dans des fenêtres 23 formées en vis-à-vis dans les rondelles de guidage 15,16.

Les deuxièmes moyens élastiques 24, dont la raideur en compression est inférieure à celle des premiers moyens élastiques 19, sont constitués par des ressorts hélicoïdaux, à action circonférentielle, interposés entre le voile 18 et le moyeu 12 par l'intermédiaire de plaquettes d'appui 27. Chaque plaquette d'appui 27 présente une face dorsale en forme de dièdre et des tétons 28 pour le centrage de ressorts 24. Les ressorts 24 ont essentiellement pour rôle de filtrer les bruits tels que les bruits de boîte de vitesses ou bruit de point mort, lorsque le couple transmis par le dispositif amortisseur de torsion est nul ou faible. Las ressorts 24 sont montés dans des échancrures pratiquées pour partie à la périphérie interne du voile 18 et pour partie à la périphérie externe du moyeu 12 dans des zones où ces échancrures remplacent les dentures 25 et 26. Las ressorts 19, en combinaison avec des moyens de frottement 20, sont interposés entre les deux parties de l'amortisseur de torsion et ont essentiellement pour rôle d'amortir les vibrations qui prennent naissance entre l'arbre moteur et l'arbre récepteur lors du roulement du véhicule.

Des troisièmes moyens élastiques sont prévus pour supprimer ou atténuer les inconvénients d'une venue en butée d'une manière violente et brutale des dentures 25 et 26.

A la figure 2, ces troisièmes moyens élastiques à action circonférentielle consistent en deux blocs 29 réalisés sous forme d'anneaux en matière élastique dont chacun est engagé autour d'une dent 30 de la denture 25 du voile dans une gorge 31 de cette dent. Les blocs 29 sont adaptés à être comprimés par les deux dents voisines correspondantes 32 de la denture 26 du moyeu 12.

Dans la description qui va suivre, des troisièmes moyens élastiques à action circonférentielle réalisés conformément aux enseignements de l'invention, les éléments communs ou similaires à la présente invention et à l'art antérieur seront désignés par les mêmes chiffres de référence.

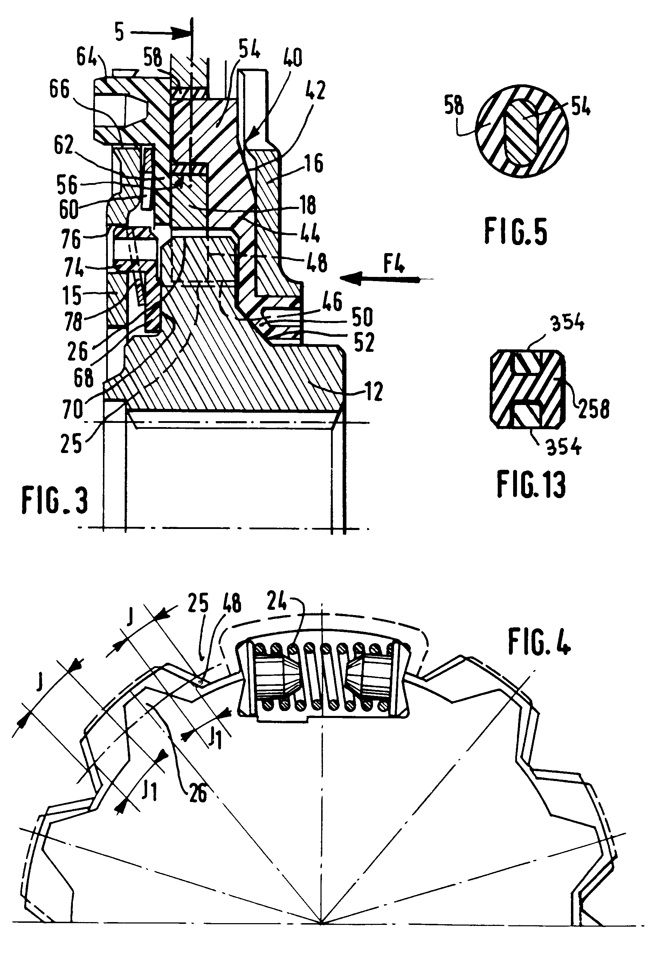

A la figure 3, les troisièmes moyens élastiques portent la référence 40. Il s'agit d'un ensemble formant rondelle d'amortissement des chocs 40, qui, selon l'invention, est constitué par au moins une pièce rigide 42 présentant ici la forme générale d'une rondelle et, radicalement au dela d'une denture 48 de la pièce rigide 40 décrite ci après, par au moins une seconde pièce 58 déformable élastiquement. Les troisiemes moyens élastiques selon l'invention sont distincts des premiers 19 et seconds moyens élastiques 24 comme dans les figures 1 et 2.

Plus précisément la pièce 42 comporte une portion annulaire centrale 44 qui s'étend dans un plan radial et axialement entre le voile 18 et la rondelle de guidage 16. Le bord radial périphérique interne 46 de la portion centrale 44 comporte une denture 48 en matériau rigide, dont le profil est complémentaire de la denture 26 du moyeu 12, avec au repos un jeu circonférentiel J1 inférieur au jeu circonférentiel J prévu au repos entre la denture 25 du voile 18 et la denture 26 du moyeu 12.

La denture 26 du moyeu 12 (figure 3) est prolongée axialement vers la droite pour pouvoir engrener à la fois avec la denture 25 du voile 18 et avec la denture 48 formée dans la première pièce rigide 42 de la rondelle d'amortissement des chocs 40.

La denture 48 comporte des dents de forme trapézoïdale, comme celle des dentures 25 et 26, qui sont reçues avec jeu dans des échancrures complémentaires prévues dans la denture 26 du moyeu 12, avec alternance circonférentielle des dents et des échancrures.

La portion annulaire 44 se prolonge également radialement vers l'intérieur par une partie constituant un palier conique 50, qui est en contact avec une portée conique correspondante 52 formée sur le moyeu 12.

Le palier conique 50 sert au centrage de la rondelle de guidage 16 sur le moyeu 12 et présente un retour d'orientation axiale pour coopération avec ladite rondelle 16, elle-même dotée d'un retour axial.

Au voisinage de son rebord radial extérieur, la portion 44 comporte une série de tétons 54, qui s'étendent axialement en direction du voile 18 et en direction opposée par rapport au retour axial du palier 50. Ces tétons sont répartis circonférentiellement, leur nombre dépendant des applications.

Chaque téton 54 est reçu dans un trou 56 ou une ouverture formée en correspondance dans le voile 18. Chaque téton venu de matière avec la première pièce rigide assure la liaison en rotation élastique de la rondelle d'amortissement 40 avec le voile 18 avec interposition d'une série de secondes pièces déformables élastiquement 58 montées dans les trous 56. Chaque seconde pièce 58 est une bague en matériau déformable élastiquement, par exemple en caoutchouc, dont le profil extérieur est complémentaire de celui du trou 56 et dont le profil intérieur est complémentaire du profil extérieur du téton 54.

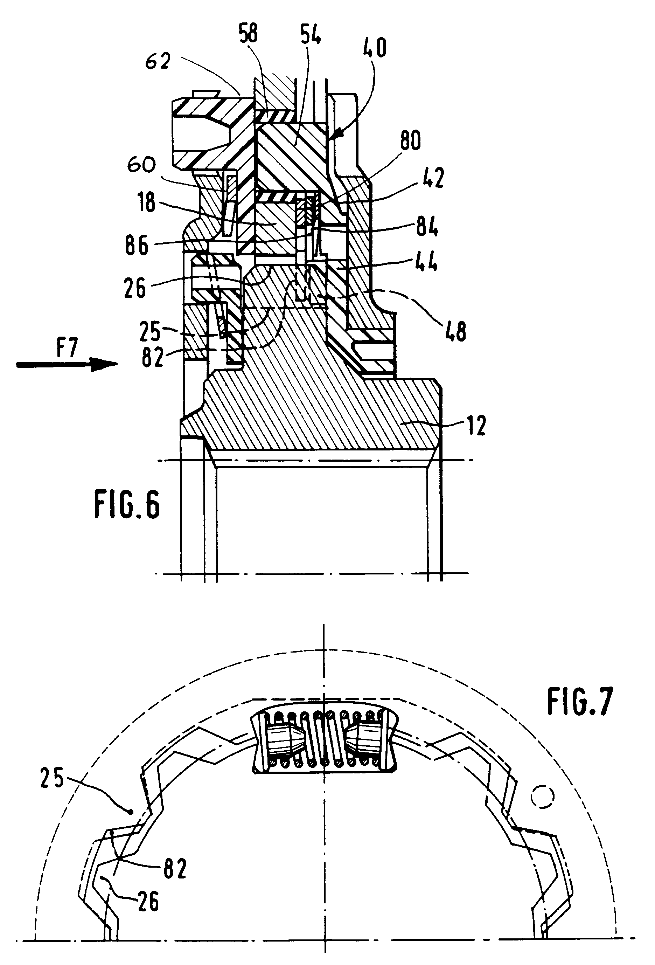

A la figure 5, chaque téton possède un profil de forme oblongue avec des extrémités circonférentielles arrondies en forme de demi-cercle reliées entre elles par deux bords parallèles entre eux. Chaque téton 54 forme donc globalement une patte. En variante (non représenté) chaque téton oblong peut être à profil oval ou elliptique, la forme oblongue améliorant dans tous les cas de transmission de couple.

Ainsi qu'on l'aura compris, l'ensemble 40 constitué par la première pièce rigide 42 et par les pièces déformables élastiquement 58 constitue une rondelle d'amortissement des chocs agencée entre le voile 18 et le moyeu 12 en s'etendant, comme dans les autres lignes, en direction radiale parallèlement au voile 18.

Avantageusement la pièce 42 est ici en matière plastique à faible coefficient de friction, tel que du polyamide, et forme dans son ensemble un palier entretoise lié en rotation au voile 18 avec interposition des bagues 58. On appréciera que l'on tire parti avantageusement de ce palier pour former de manière économique dans celui-ci par moulage la denture 48. Ce palier a donc une fonction supplémentaire et est rigidifié par la denture 48.

On remarquera également, que la portion 44 forme une entretoise entre le voile 18 et la rondelle 16 et que l'on tire avantageusement parti de l'espace disponible au niveau de la périphérie interne du voile 18 pour former la denture 48.

A la figure 4, on a représenté le jeu J1 prévu entre les dentures 26 et 48, ce jeu étant inférieur au jeu prévu entre les dentures 25 et 26. Comme on peut le constater aucune des dentures 25,26 n'est entaillée et celles-ci peuvent venir en butée l'une contre l'autre grâce au fait que la rondelle d'amortissement 40 s'étend selon une direction parallèle au voile 18.

L'amortisseur de torsion comporte également une rondelle élastique à action axiale 60 et une rondelle de frottement 62 interposée successivement entre la rondelle de guidage 15 et le voile 18 (figure 3).

La rondelle de frottement 62, de préférence en matériau à faible coefficient de friction, tel que du polyamide, est rendue solidaire en rotation de la rondelle 15 par une pluralité de tétons 64, qui sont reçus de manière complémentaire dans les trous 66 de la rondelle 15. La rondelle élastique 60 consiste ici en une rondelle Belleville et prend appui sur les rondelles 15 et 62 en provoquant un serrage axial de la rondelle 62 contre le voile 18 et le serrage de la portion 44 entre le voile 18 et l'autre rondelle de guidage 16.

Radialement en-dessous de la rondelle 60, il est prévu également une rondelle 68 entre la face radiale 70 de la bride saillante du moyeu 12 et la rondelle de guidage 15. La rondelle 68, de même nature que la rondelle 62, comporte des tétons 74 qui sont reçus axialement dans des ouvertures complémentaires 76 de la rondelle 15. Les rondelles 15 et 68 sont ainsi liées en rotation par coopération de formes et il est prévu une rondelle élastique à action axiale 78 (une rondelle Belleville) entre ces deux éléments, le tarage de la rondelle 78 étant inférieur à celui-ci de la rondelle 60.

La rondelle 78 est liée à la rondelle 68 par coopération de formes et présente à cet effet des échancrures coopérant avec les tétons 74. Lors du fonctionnement, dans un premier temps, et du fait que la raideur des ressorts 19 est supérieure à celle des ressorts 24, le voile 18 est admis à se déplacer angulairement par rapport au moyeu 12 à l'encontre de l'effort exercé par les ressorts 24 et par les moyens de frottement 68-78-40 jusqu'à ce que les dents de la denture 26 viennent en contact avec les dents de la denture 48 de la première pièce 42, avec un effet de freinage anti-bruit provoqué par les bagues 58, et puis enfin jusqu'à ce que les dentures 25 et 26 viennent en contact mutuel. Durant ce fonctionnement, le voile 18 et les rondelles 15-16 forment un bloc.

Dans un deuxième temps, le voile étant solidaire en rotation du moyeu, les ressorts 19 sont admis à être comprimés et les moyens de frottements 60,62,44 interviennent. Le mouvement se produit jusqu'à venue à spires jointives des ressorts 19 ou par coopération des entretoises 17 avec les ouvertures 21.

Le mode de réalisation représenté aux figures 6 et 7 diffère de celui des figures 3 à 5 en ce qu'une rondelle supplémentaire 80 d'hystérésis variable est disposée axialement entre le voile 18 et la portion annulaire 44 de la pièce rigide 42 de la rondelle d'amortissement 40. Ladite rondelle 80 comporte une denture radiale interne 82 et est plaquée élastiquement contre le voile 18 par l'intermédiaire d'une rondelle élastique à action axiale 84 (ici du type rondelle Belleville) prenant appui sur la portion 44.

Cette rondelle 84 a une charge inférieure à celle de la rondelle 60, et les tétons 54 sont admis à venir coopérer avec la rondelle 62 en sorte que la rondelle 84 n'est pas comprimée outre mesure.

Comme montré à la figure 7, la denture 82 est complémentaire de celle des dentures 25 et 26 en étant montée avec jeu inférieur à celui prévu entre les dentures 25 et 26. La denture 82 est dimensionnée de manière à ne pas interférer avec la denture 48. Cette rondelle 80 agit donc comme un tiroir et freine également la venue en butée des dents des dentures 25,26.

Une rondelle 86 est disposée entre la rondelle élastique 84 et la rondelle d'hystérésis variable 80 pour permettre l'application répartie de l'effort axial de la rondelle 84 sur la rondelle 80. Tous les autres composants éléments de structure du dispositif des figures 6 et 7 sont identiques à ceux du dispositif des figures 3 à 5 et sont désignés par les mêmes chiffres de référence. En fonctionnement, la rondelle 80 est admise à frotter contre le voile 18 après rattrapage du jeu entre les dentures 82,25 et agit à la manière d'un tiroir.

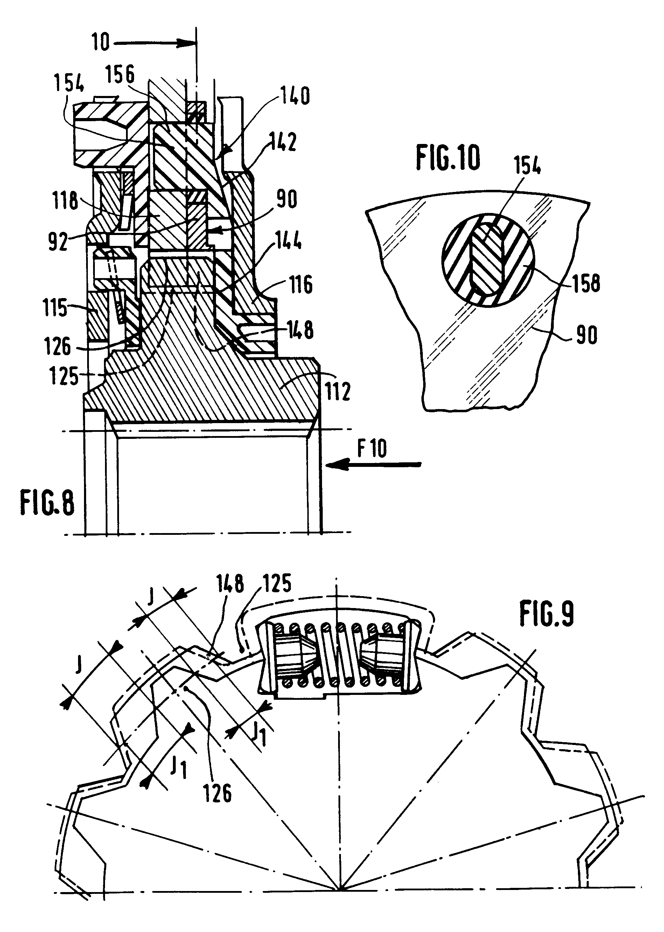

Dans les figures 8 à 10 est représenté un troisième mode de réalisation et sur ces figures les éléments identiques ou équivalents à ceux du dispositif représenté dans les figures 3 à 5 sont désignés par les mêmes chiffres de référence augmentés de 100.

On constate à la figure 8, que les tétons 154 de la pièce rigide 142 sont reçus directement dans les trous 156 du voile 118. La bord radial interne de la portion centrale 144 de la pièce rigide 142 de la rondelle 140 ne comporte pas de dentures complémentaires des dentures 126 du moyeu 112 et 125 du voile 118. Une denture complémentaire 148 est formée dans une pièce rigide 90 présentant également la forme d'une rondelle s'étendant dans un plan radial et disposée axialement entre le voile 118 et la portion centrale 144 de la pièce rigide 140.

Au voisinage de sa périphérie radiale externe, la pièce rigide 90 comporte une série de trous axiaux 92 qui sont traversés par les tétons 154 avec interposition dans les trous 92, autour de chaque téton, d'une bague en matériau élastique déformable 158 tel que du caoutchouc. L'ensemble constitué par les éléments 90,158,142 assure donc la même fonction d'amortissement que l'ensemble constitué par les pièces 42 et 58 des figures 1 à 3, la pièce rigide 90 étant liée élastiquement en rotation au voile 118 par l'intermédiaire de tétons 154 et appartenant à la rondelle d'amortissement des chocs selon l'invention, les bagues 158 constituant les secondes piéces élastiquement déformables

A cet effet (figure 9) le jeu circonférentiel J₁ existant entre la denture 148 et la denture 126 est inférieur au jeu circonférentiel J existant entre les dentures 125 et 126. La fonctionnement de ce mode de réalisation est identique à celui des figures 1 à 3.

Tous les autres composants des figures 8 à 10 référencés ou non sont identiques à ceux du dispositif des figures 3 à 5. On appréciera que la rondelle 140 et le voile sont inchangés.

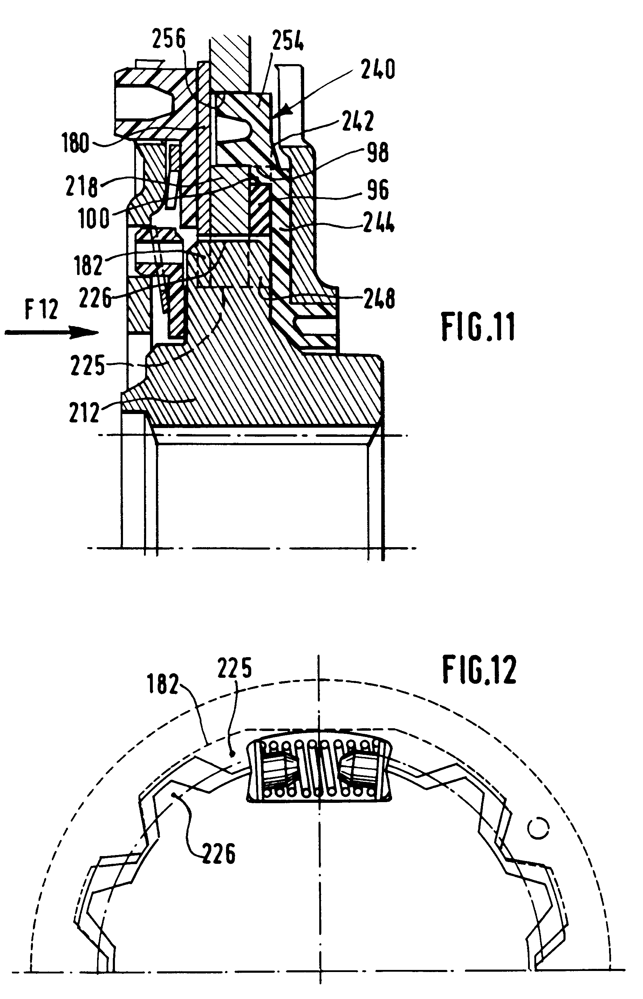

Dans un quatrième mode de réalisation des figures 11 à 12, l'ensemble de composants identique ou similaire à ceux du dispositif des figures 3 à 4 sont désignés par les mêmes chiffres de référence augmentés de 200.

La conception de la pièce rigide 242 est identique à celle décrite et représentée aux figures 8 à 10.

Une pièce 96, formant la rondelle d'amortissement des chocs selon l'invention, est réalisée ici en deux parties et comporte une partie interne rigide avec une denture 248 formée au voisinage de son contour radial interne et une partie externe élastiquement déformable. Cette denture 248 complémentaire des dentures 226 du moyeu 212 et 225 du voile 218 assure la même fonction que les dentures 48 et 148 décrites précédemment.

La pièce 96 en forme de rondelle s'étend radialement et axialement entre le voile 218 et la portion centrale 244 de la pièce rigide 242. Elle est liée élastiquement en rotation au voile 218 par des échancrures 98 formées dans son contour radial externe en matière élastiquement déformable et qui coopèrent avec des formes complémentaires 100 de chacun des tétons 254, ces derniers étant reçus directement dans des trous 256 du voile 218.

On appréciera que les formes complémentaires 100 forment un épaulement pour contact avec le voile 218 en sorte que la rondelle 96 ne risque pas d'être trop écrasée. Bien entendu dans les autres figures on peut prévoir un tel épaulement.

Ce mode de réalisation comporte également une rondelle d'hystérésis variable 180 avec une denture 182 dont le fonctionnement est identique à la rondelle d'hystérésis 80 des figures 6 et 7.

Ainsi qu'on l'aura compris et qu'il ressort à l'évidence des dessins, la première pièce rigide 44,90,96, qui est dotée selon l'invention de ladite denture complémentaire de celle du moyeu 12, présente des échancrures au niveau des ressorts 24 pour ne pas interférer avec ceux-ci, telles que visibles dans les figures 4 et 9. Il en de même en ce qui concerne des rondelles d'hystérésis variables telles que visibles dans les figures 12 et 7.

Bien entendu la présente invention n'est pas limitée aux exemples de réalisation décrits ci-dessus. En particulier l'ensemble formant la rondelle d'amortissement élastique peut appartenir à un pré-amortisseur disposé entre le voile 18 et l'une des rondelles de guidage, comme cela est décrit et représenté dans le document DE-A-3 810 922, la denture de la bride du moyeu étant prolongée pour engrener avec la denture radiale interne de la rondelle d'amortissement selon l'invention. De préférence la rondelle est alors liée en rotation par coopération de formes avec les entretoises du dispositif pré-amortisseur qui présente des échancrures pour coopérer par emboîtement avec ces entretoises.

A titre de variante, les moyens élastiques à action circonférentielle peuvent être constitués par des blocs de matière élastique.

Les jeux J et J1 peuvent être symétriques au repos contrairement aux modes de réalisation représentés ci-dessus dans lesquels ils sont dissymétriques.

Les tétons 54,154,254, répartis régulièrement circonférentiellement, peuvent être chacun dédoublés. Dans ce cas, (figure 13) les bagues en matière élastique 58 de la figure 5 sont remplacées par des blocs 258 en matière élastique ayant une forme de H. Chaque téton élémentaire 354 pénétrant dans une branche du H. L'amortissement des chocs est procuré par la partie verticale des blocs 258, la partie horizontale du H séparant les tétons 354 du H 258.

Enfin le palier 142,242 peut ne pas être conique et un jeu radial peut exister entre celui-ci et le moyeu.

## Revendications

1. Dispositif amortisseur de torsion, notamment pour véhicule automobile, du genre comportant deux parties coaxiales (15-16-11-10,18-12) montées mobiles en rotation l'une par rapport à l'autre, selon une course angulaire limitée, à l'encontre de premiers moyens élastiques (19), dispositif dans lequel l'une (18-12) de ces deux parties est elle-même composée d'un voile (18) et d'un moyeu (12) coaxiaux mobiles en rotation l'un par rapport à l'autre, à l'encontre de deuxièmes moyens élastiques (24), dans un secteur de débattement angulaire défini par des dentures complémentaires (25,26), avec un jeu circonférentiel (J), du voile (18) et du moyeu (12) et dans lequel sont prévus des troisièmes moyens élastiques (58,158,98) qui, distincts des premiers (19) et deuxièmes (24) moyens élastiques, permettent une venue en butée circonférentielle positive de la denture (25) du voile (18) avec la denture (26) du moyeu (12) tout en procurant un effet de freinage anti-bruit, ces troisièmes moyens élastiques comportant une rondelle d'amortissement des chocs, liée en rotation au voile, qui s'étend en direction radiale parallèlement au voile (18) et qui est pourvue d'une denture complémentaire de celle du moyeu (12), engrenant avec la denture (26) du moyeu (12) avec un jeu circonférentiel (J1) inférieur au jeu circonférentiel (J) prévu entre les dentures (125) du voile (18) et (26) du moyeu (12), la denture (26) du moyeu (12) étant prolongée axialement pour pouvoir engrener avec les dentures du voile (18) et de ladite rondelle d'amortissement, ladite rondelle d'amortissement (40,90,96) comporte au moins une pièce rigide (42,148,248), dite première pièce rigide, dotée de ladite denture complémentaire et, radialement au-delà de ladite denture complémentaire, au moins une seconde pièce déformable élastiquement (58,158,98) pour liaison en rotation avec ledit voile (18,118,218).

2. Dispositif selon la revendication 1, caractérisé en ce que la première pièce rigide (42) comporte une portion annulaire (44) dont le bord radial interne (46) est pourvu de la denture complémentaire (48) et en ce que la seconde pièce déformable élastiquement (58) assure la liaison en rotation de la première pièce rigide (42) avec le voile (18).

3. Dispositif selon la revendication 2, caractérisé en ce que ladite portion annulaire rigide (44) comporte au moins un téton (54) qui s'étend axialement en direction du voile (18) pour être reçue dans une ouverture (56) de ce dernier avec interposition de ladite seconde pièce déformable (58).

4. Dispositif selon la revendication 3, caractérisé en ce que ladite seconde pièce déformable est une bague (58) en matériau déformable élastiquement qui entoure ledit téton (54) de profil oblong.

5. Dispositif selon la revendication 1, caractérisé en ce qu'une pièce rigide (142,242) comporte une portion annulaire (144,244) et est liée en rotation au voile (118,218) et en ce que ladite rondelle d'amortissement (90,96), pourvue de ladite denture complémentaire, est liée en rotation à ladite portion annulaire rigide (144,244) avec interposition de la seconde pièce déformable élastiquement (158,98).

6. Dispositif selon la revendication 5, caractérisé en ce que ladite portion annulaire rigide comporte au moins un téton (154,254) qui s'étend axialement en direction du voile pour être reçue dans une ouverture (156,256) de ce dernier.

7. Dispositif selon la revendication 6, caractérisé en ce que ladite rondelle d'amortissement (90,96) est agencée entre le voile (118,218) et ladite portion annulaire rigide (144,244).

8. Dispositif selon la revendication 7, caractérisé en ce que ladite rondelle d'amortissement (90) comporte une série de trous axiaux (92) qui sont traversés par lesdits tétons (154) avec interposition dans lesdits trous (92), autour de chaque dit téton (154), d'une bague en matériau élastiquement déformable (158) constituant ladite seconde pièce élastiquement déformable.

9. Dispositif selon la revendication 7, caractérisé en ce que ladite rondelle d'amortissement (96) est réalisée en deux parties et comporte une partie interne rigide avec lesdites dentures complémentaires (248) et une partie externe déformable élastiquement constituant ladite seconde pièce élastiquement déformable.

10. Dispositif selon la revendication 9, caractérisé en ce que ladite rondelle d'amortissement (96) est liée élastiquement en rotation au voile (278) par des échancrures (98) formées dans son contour radial externe en matière élastiquement déformable et qui coopèrent avec des formes complémentaires (100) de chacun desdits tétons (254) de la pièce rigide à portion annulaire (244).

## Claims

1. A torsion damping device, in particular for a motor vehicle, of the type comprising two coaxial parts (15-16-11-10, 18-12) which are mounted for rotational movement with respect to each other, along a limited angular path, against first resilient means (19), in which device one (18-12) of these two parts itself consists of a damper plate (18) and of a hub (12) mutually coaxial and able to rotate with respect to each other, against second resilient means (24), in a sector of annular displacement defined by complementary sets of teeth (25, 26), with a circumferential clearance (J), of the damper plate (18) and of the hub (12) and in which third resilient means (58, 158, 98) are provided which, being separate from the first (19) and second (24) resilient means, allow the set of teeth (25) of the damper plate (18) to come into positive circumferential abutment with the set of teeth (26) of the hub (12) while providing a sound-deadening braking effect, these third resilient means comprising a shock absorbing washer, rotationally coupled with the damper plate, which extends in the radial direction parallel to the damper plate (18) and which is provided with a set of teeth complementary to that of the hub (12), meshing with the set of teeth (26) of the hub (12) with a circumferential clearance (J1) less than the circumferential clearance (J) provided between the sets of teeth (125) of the damper plate (18) and (26) of the hub (12), the set of teeth (26) of the hub (12) being extended axially in order to be able to mesh with the sets of teeth of the damper plate (18) and of the said shock absorbing washer, the said shock absorbing washer (40, 90, 96) comprises at least one rigid member (42, 148, 248), the said first rigid member, provided with the said complementary set of teeth and, radially beyond the said complementary set of teeth, at least one second resiliently deformable member (58, 158, 98) for rotational coupling with the said damper plate (18, 118, 218).

2. A device according to Claim 1,
**characterised in that** the first rigid member (42) comprises an annular portion (44), the inner radial edge (46) of which is provided with the complementary set of teeth (48),
**and in that** the second resiliently deformable member (58) ensures the rotational coupling of the first rigid member (42) with the damper plate (18).

3. A device according to Claim 2,
**characterised in that** the said rigid annular portion (44) comprises at least one spigot (54) which extends axially towards the damper plate (18) to be received in an aperture (56) in the latter with the interposition of the said second deformable member (58).

4. A device according to Claim 3,
**characterised in that** the second deformable member is a ring (58) of resiliently deformable material which surrounds the said spigot (54), which has an oblong profile.

5. A device according to Claim 1,
**characterised in that** a rigid member (142, 242) comprises an annular portion (144, 244) and is rotationally coupled to the damper plate (118, 218),
**and in that** the said shock absorbing washer (90, 96), provided with the said complementary set of teeth, is rotationally coupled to the said rigid annular portion (144, 244) with the interposition of the second resiliently deformable member (158, 98).

6. A device according to Claim 5,
**characterised in that** the said rigid annular portion comprises at least one spigot (154, 254) which extends axially towards the damper plate to be received in an aperture (156, 256) in the latter.

7. A device according to Claim 6,
**characterised in that** the said shock absorbing washer (90, 96) is disposed between the damper plate (118, 218) and the said rigid annular portion (144, 244).

8. A device according to Claim 7,
**characterised in that** the said shock absorbing washer (90) comprises a series of axial holes (92) through which the said spigots (154) pass with the interposition into the said holes (92), around each said spigot (154), of a ring of resiliently deformable material (158) forming the said second resiliently deformable member.

9. A device according to Claim 7,
**characterised in that** the said shock absorbing washer (96) is made in two parts and comprises a rigid inner part with the said complementary sets of teeth (248) and a resiliently deformable outer part forming the said second resiliently deformable member.

10. A device according to Claim 9,
**characterised in that** the said shock absorbing washer (96) is resiliently coupled in rotation to the damper plate (278) by slots (98) formed in its outer radial profile of resiliently deformable material and which cooperate with complementary shapes (100) of each of the said spigots (254) of the rigid member with the annular portion (244).

## Patentansprüche

1. Drehschwingungsdämpfer, insbesondere für Kraftfahrzeuge, bestehend aus zwei koaxialen Teilen (15-16-11-10, 18-12), die im Verhältnis zueinander drehbeweglich auf einem begrenzten Winkelabstand entgegen ersten elastischen Mitteln (19) angebracht sind, wobei einer (18-12) dieser beiden Teile wiederum aus einer Mitnehmerscheibe (18) und einer damit koaxialen Nabe (12) besteht, die im Verhältnis zueinander drehbeweglich entgegen zweiten elastischen Mitteln (24) auf einem Winkelauslenkungssektor eingebaut sind, der durch mit einem Umfangsspiel (J) ausgeführte komplementäre Verzahnungen (25, 26) der Mitnehmerscheibe (18) und der Nabe (12) definiert wird, und wobei dritte elastische Mittel (58, 158, 98) vorgesehen sind, die sich von den ersten (19) und zweiten (24) elastischen Mitteln unterscheiden und am Umfang ein positives Anschlagen der Verzahnung (25) der Mitnehmerscheibe (18) mit der Verzahnung (26) der Nabe (12) unter Herbeiführung einer geräuschdämpfenden Bremswirkung ermöglichen, wobei diese dritten elastischen Mittel eine mit der Mitnehmerscheibe drehend verbundene Stoßdämpfungsscheibe umfassen, die sich in radialer Richtung parallel zur Mitnehmerscheibe (18) erstreckt und die mit einer zur Verzahnung der Nabe (12) komplementären Verzahnung versehen ist, welche mit der Verzahnung (26) der Nabe (12) mit einem Umfangsspiel (J1) in Eingriff tritt, das kleiner als das Umfangsspiel (J) zwischen den Verzahnungen (125) der Mitnehmerscheibe (18) und (26) der Nabe (12) ist, wobei die Verzahnung (26) der Nabe (12) axial verlängert wird, um mit den Verzahnungen der Mitnehmerscheibe (18) und der genannten Dämpfungsscheibe in Eingriff treten zu können , **dadurch gekennzeichnet**, daß die genannte Dämpfungsscheibe (40, 90, 96) mindestens ein starres Teil (42, 148, 248) umfaßt, das als starres erstes Teil bezeichnet wird und das mit der genannten komplementären Verzahnung versehen ist, sowie radial hinter dieser komplementären Verzahnung mindestens ein elastisch verformbares zweites Teil (58, 158, 98) für eine drehende Verbindung mit der genannten Mitnehmerscheibe (18, 118, 218).

2. Schwingungsdämpfer nach Anspruch 1 , **dadurch gekennzeichnet,** daß das starre erste Teil (42) einen ringförmigen Abschnitt (44) umfaßt, dessen radiale Innenkante (46) mit der komplementären Verzahnung (48) versehen ist, und daß das elastisch verformbare zweite Teil (58) die drehende Verbindung des starren ersten Teils (42) mit der Mitnehmerscheibe (18) herbeiführt.

3. Schwingungsdämpfer nach Anspruch 2 , **dadurch gekennzeichnet,** daß der starre ringförmige Abschnitt (44) mindestens einen Ansatz (54) umfaßt, der sich axial in Richtung der Mitnehmerscheibe (18) erstreckt, um in eine darin vorgesehene Öffnung (56) eingesetzt zu werden, wobei das verformbare zweite Teil (58) dazwischen eingefügt wird.

4. Schwingungsdämpfer nach Anspruch 3 , **dadurch gekennzeichnet,** daß das verformbare zweite Teil ein Ring (58) aus elastisch verformbarem Material ist, der den Ansatz (54) mit länglichem Profil umgibt.

5. Schwingungsdämpfer nach Anspruch 1 , **dadurch gekennzeichnet,** daß ein starres Teil (142, 242) einen ringförmigen Abschnitt (144, 244) umfaßt und drehend mit der Mitnehmerscheibe (118, 218) verbunden ist und daß die Dämpfungsscheibe (90, 96) mit der daran befindlichen komplementären Verzahnung unter Einfügung des elastisch verformbaren zweiten Teils (158, 98) drehend mit dem starren ringförmigen Abschnitt (144, 244) verbunden ist.

6. Schwingungsdämpfer nach Anspruch 5 , **dadurch gekennzeichnet,** daß der starre ringförmige Abschnitt mindestens einen Ansatz (154, 254) umfaßt, der sich axial in Richtung der Mitnehmerscheibe erstreckt, um in eine darin vorgesehenen Öffnung (156, 256) eingesetzt zu werden.

7. Schwingungsdämpfer nach Anspruch 6 , **dadurch gekennzeichnet,** daß die Dämpfungsscheibe (90, 96) zwischen der Mitnehmerscheibe (118, 218) und dem starren ringförmigen Abschnitt (144, 244) angeordnet ist.

8. Schwingungsdämpfer nach Anspruch 7 , **dadurch gekennzeichnet,** daß die Dämpfungsscheibe (90) eine Reihe von axialen Löchern (92) umfaßt, durch welche die Ansätze (154) hindurchgehen, wobei in den genannten Löchern (92) um jeden Ansatz (154) herum ein Ring aus elastisch verformbarem Material (158) eingesetzt ist, der das elastisch verformbare zweite Teil bildet.

9. Schwingungsdämpfer nach Anspruch 7 , **dadurch gekennzeichnet,** daß die Dämpfungsscheibe (96) zweiteilig ausgeführt ist und einen starren Innenteil mit den genannten komplementären Verzahnungen (248) und einen elastisch verformbaren Außenteil umfaßt, der das elastisch verformbare zweite Teil bildet.

10. Schwingungsdämpfer nach Anspruch 9 , **dadurch gekennzeichnet,** daß die Dämpfungsscheibe (96) drehelastisch mit der Mitnehmerscheibe (218) durch Aussparungen (98) verbunden ist, die in ihrem radialen Außenprofil aus elastisch verformbarem Material ausgebildet sind und die mit komplementären Formen (100) jedes der Ansätze (254) des starren Teils mit ringförmigem Abschnitt (244) zusammenwirken.
